# EUROPEAN PATENT SPECIFICATION

(11) **EP 1 444 449 B1**
(45) Date of publication and mention of the grant of the patent: **03.01.2007**
(21) Application number: 02779559.0
(22) Date of filing: 14.11.2002
(51) Int. Cl.: F16F 3/02

(54) **SUPPORT DEVICE FOR THE DAMPING AND ABSORPTION OF VIBRATIONS CAUSED BY OPERATING MACHINES, IN PARTICULAR BY PRESSES**
LAGERUNGSVORRICHTUNG ZUM DÄMPFEN UND ABSORBIEREN VON SCHWINGUNGEN VERURSACHT DURCH DEN BETRIEB VON MASCHINEN, INSBESONDERE PRESSEN
DISPOSITIF SUPPORT A ATTENUATION ET AMORTISSEMENT DES VIBRATIONS PROVOQUEES PAR LES MACHINES EN FONCTIONNEMENT, EN PARTICULIER LES PRESSES

(30) Priority: 16.11.2001 IT MI20012417
(43) Date of publication of application: 11.08.2004
(73) Proprietor: Progettazioni Innovative di Gandini L.& C. S.a.S., 23861 Cesana Brianza-Lecco (IT)
(72) Inventor: GANDINI, Angelo, I-23900 Lecco (IT); GANDINI, Giosuè, I- 23900 Lecco (IT)
(74) Representative: Martegani, Franco
(86) International application number: PCT/EP2002/012758
(87) International publication number: WO 2003/042570

(56) References cited:
- WO-A-99/17033
- DE-A- 2 822 595
- DE-A- 19 939 500
- GB-A- 2 027 843
- SU-A- 1 483 127
- US-A- 3 080 160

## Description

The present invention refers to the damping and absorption of vibrations caused by operating machines in which mechanical impulses are induced cyclically, like vibrations and/or shocks, which are transmitted to the machine and to the underlying structure, with negative consequences both to the underlying support structure and to the good operation and the conservation of the efficiency of the machine. A typical case of such operating machines consists of presses, in which work is carried out by plastic deformation, at hot or cold temperatures, induced by cyclical hammer blows to give the semi-worked material a determined shape with speed and precision.

To make the characteristics and the advantages of the present invention with respect to the prior art clearer it shall now be described with reference to its application to presses, as an example and not for limiting purposes.

The absorption and damping of vibrations caused by the shocks of the press is generally carried out with suspensions or supports placed between the presses and the underlying structure, which are required to carry out the functions of absorbing the kinetic energy of the hammer blow, of limiting the magnitude of vibration caused and of damping the vibration itself in a short period of time, as well as of keeping the press in its determined position.

In the state of the art (see e.g. SU-A-1 483 127) a large variety of technical solutions for such functions is described which, however, are not satisfactory in their practical application.

A category of such suspensions is that of suspensions or supports made from elastomeric materials, natural rubber or synthesis polymers, in the form of absorption bodies placed between press and support structure. Suspensions made from rubber generally offer a low yield and a short useful life.

With the use of rubber or elastomers with a soft consistency the oscillation of the press increases with an unsatisfactory damping of the vibrations. With hard elastomers the magnitude of oscillation reduces, but the damping of the vibrations is very low. Elastomer suspensions therefore require their integration with other damping devices to the detriment of the cost-effectiveness and simplicity of the overall suspension.

Another category of supports or suspensions is that based upon simple helical or telescopic springs. They have a good absorption of the vibrations caused by the shocks of the press, but they give rise to overall oscillations of a substantial size at the machine and they give substantial problems for its connection to the production line, for example, the skidding of the conveyor belt, the lacking or imprecise gripping of the piece with the transfer gripper, currently known as "transfer".

For supports with springs there are further problems deriving from the fact that the oscillation induced in the press causes a dynamic load on the support structure of a magnitude equal to the weight of the press, which must therefore be fixed to the floor.

A further drawback lies in the encumbrance of helical spring suspensions, which causes an overlifting of the press which requires a platform with access steps to the work surface for a total of 400-600 mm, which is expensive and dangerous or at least awkward for the operators.

In the state of the art other technical solutions have also been proposed for supports with oleodynamic, pneumatic and electromagnetic devices, devices with an elastic foil - by themselves or combined together - placed between them both to dampen the vibrations and to absorb the kinetic energy. Such solutions are also affected by drawbacks regarding their encumbrance, cost, complexity and low functionality.

The purpose of the present invention is that of realising a suspension or support for operating machines, and particularly for presses, which overcomes the described drawbacks for supports of the prior art both as far a functionality and as far as convenience are concerned.

This purpose is achieved by realising a plate support according to the present invention based upon coupled elastic leaf-springs as defined, in its more general description, in the first claim and, in its preferential or alternative embodiments, in the dependent claims.

The characteristics and advantages of the anti-vibration support according to the present invention shall become clearer from the following description, given as an example and not for limiting purposes, referring to the attached schematic drawings, in which:
- figure 1 is a section view of the basic anti-vibration element of the support according to the present invention, essentially explaining its operation;
- figure 2A is a section view of an embodiment of the support according to the present invention, in which two anti-vibration elements are used, whereas figure 2B is the plan view thereof;
- figure 3A is a section view of an embodiment of the support according to the present invention, in which two parallel pairs of anti-vibration elements in series are used, whereas figure 3B is the plan view thereof;
- figure 3C is a section view of an embodiment of the support according to the constructive design of figures 3A,B, in which individual leaf-springs are used as anti-vibration elements housed in the end plates and connected to the centre with the interposition of a central centring element which transmits the axial forces between the leaf-springs themselves, whereas figure 3D is the plan view thereof;
- figure 4A is a section view of an embodiment of the support according to the present invention, in which three anti-vibration elements are used, whereas figure 4B is the plan view thereof; and
- figure 5 is a schematic elevation view illustrating, as a non-limiting example, a press mounted on a plurality of anti-vibration support devices according to the invention.

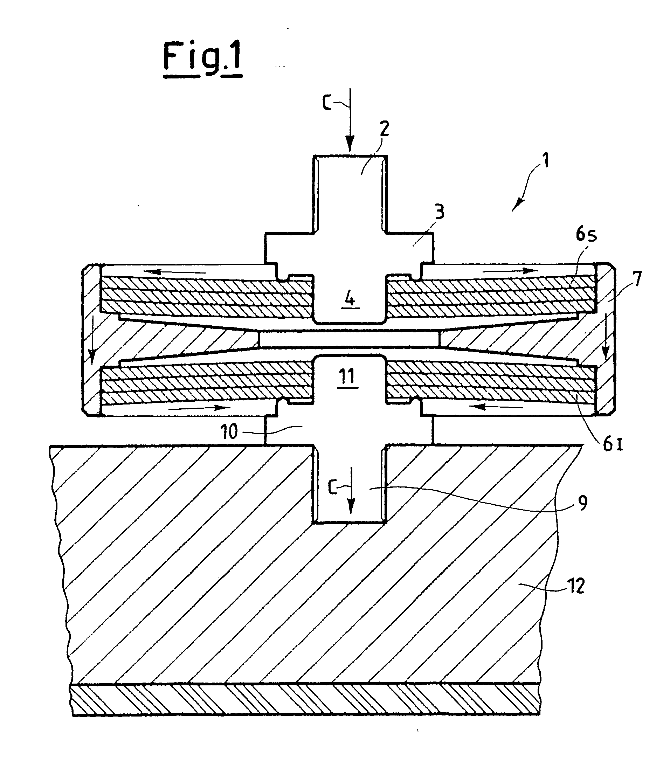

Figure 1 shows a section view of the anti-vibration element 1 of the support according to the present invention. It consists of a cylindrical upper pin 2 which receives the load C, the bang and the vibrations coming from the overlying machine.

The cylindrical pin 2 is configured in its lower part with a disc-shaped element 3, for resting it on the central part of the upper elastic leaf-spring 6ₛ, and with a centering element or peg 4 with respect to the upper leaf-spring 6ₛ. In turn, the upper elastic leaf-spring 6ₛ is rested and attached at its two ends to the two ends of a lower elastic leaf-spring 6_{I} below it, through a peripheral support and position-stabilising element 7. The lower leaf-spring 6_{I}, in turn, rests upon a second cylindrical pin 9 configured in its lower part with a disc-shaped element 10, for the resting of the central part of the elastic lower leaf-spring 6_{I}, and with a centering element 11.

The two centering elements or pegs 4 and 11 at the inner ends of the pins are housed in a coherent centring recess at the centre of the leaf-springs 6_{s,I}. The lower part 12 transmits the load C to the underlying structure, after having dampened and absorbed the shock and the vibrations coming from the overlying press. The force transmission arrows are purposefully smaller and smaller from the top to the bottom to show the progression of the damping visually.

By following the progression of the forces indicated in figure 1, the shock coming from above transmits from the pin 2 to the leaf spring 6ₛ and propagates horizontally along the upper leaf-spring, a significant portion of which is left free to oscillate free from supports on the element 7. The leaf-spring oscillates freely, even slightly resonating, and transmits, with its end, the vibration of the element 7 which sends it towards the centre with the lower leaf-spring 6_{I}, which in turn oscillates in the same way as the upper leaf-spring greatly reducing the shock transmitted from above.

In the anti-vibration element 1 of the support according to the present invention the elastic damping and absorption component of the shock and of the vibrations transmitted from above consists of the pair of upper and lower elastic leaf-springs 6ₛ and 6_{I}.

They can be realised with a circular shape in plan view and can be rested both in the centre with the two cylindrical pins and along their outer circumference with the circular elements 7, as shown in the embodiments of the following figures, or else according to the shape of the traditional elongated segment-shaped leaf-spring with support at the centre and at the two ends. The upper and lower elastic leaf-springs 6ₛ and 6_{I} are preferably made with materials having a high elastic coefficient and resistance to load, for example from steel for springs, and with a structure consisting of a pack of a plurality of leaf-spring leaves.

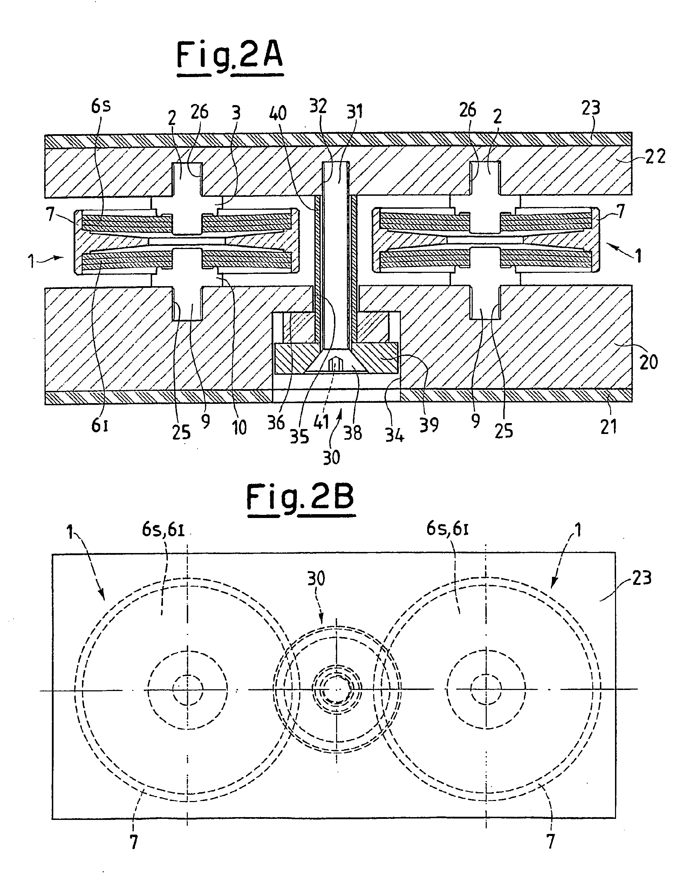

Figures 2A and 2B illustrate an embodiment of the support according to the present invention with two anti-vibration elements in a rectangular shape of the foot of the support.

The foot of the support consists of a rectangular plate base 20 to which a layer 21 of anti-sliding material is preferably applied for resting on the floor. On the opposite side the load plate is arranged, which is also rectangular 22, preferably with a layer 23 of anti-sliding material applied for resting the press on the support itself. In the inner part of the two base and load plates 20, 22 the bores, 25 and 26 respectively, are made for the attachment of the two pins 2 and 9 of the two anti-vibration elements 1. The pins 2 and 9 of said anti-vibration elements 1 are of a shape matching that of the bores 25 and 26 for their precision positioning and coupling.

According to a preferred embodiment the bores 25 and 26 are preferably threaded inside and the two pins 2 and 9 of the two anti-vibration elements 1 are also equipped with matching threadings in order to establish a precise positioning and a binding between the pins and the plates 20 and 22.

At the centre of the two plates 20 and 22, base and load plates respectively, an adjustable binding 30 is established between the two plates. In the embodiment shown in figures 2A,B it consists of a screw 31 which engages the two parts. In the load plate 22 a threaded bore 32 is made, whereas on the base plate 20 a cylindrical recess 34 is made, with a smaller cylindrical recess 35 further inside and coaxial with it, so as to create a shoulder 36 to establish the binding between the parts. The screw 31 is equipped with a countersunk head 38 which rests upon the matching conical recess of the washer 39 which in turn rests upon the shoulder 36 with the interposition of a gasket, for example made from polyurethane rubber. The correct distance between the two plates 20 and 22 is established with the locking spacer 40 placed between the washer 39 and the load plate 22. Such a spacer element 40 is made with a tubular segment which contains the screw 31. In the countersunk head 38 of the screw a seat 41 is formed to establish the connection to transmit the torque to the screw itself for it to be screwed in and unscrewed, for example with a hexagonal slot.

According to a preferred embodiment the binding system 30 is sized and installed so as to give the anti-vibration elements 1 a precompression and to always keep the two leaf-springs 6ₛ and 6_{I} under tension and in engagement with the pins 2 and 9, more specifically with their discs 3 and 10, and with the elements 7 to avoid them colliding during the damping and the oscillations.

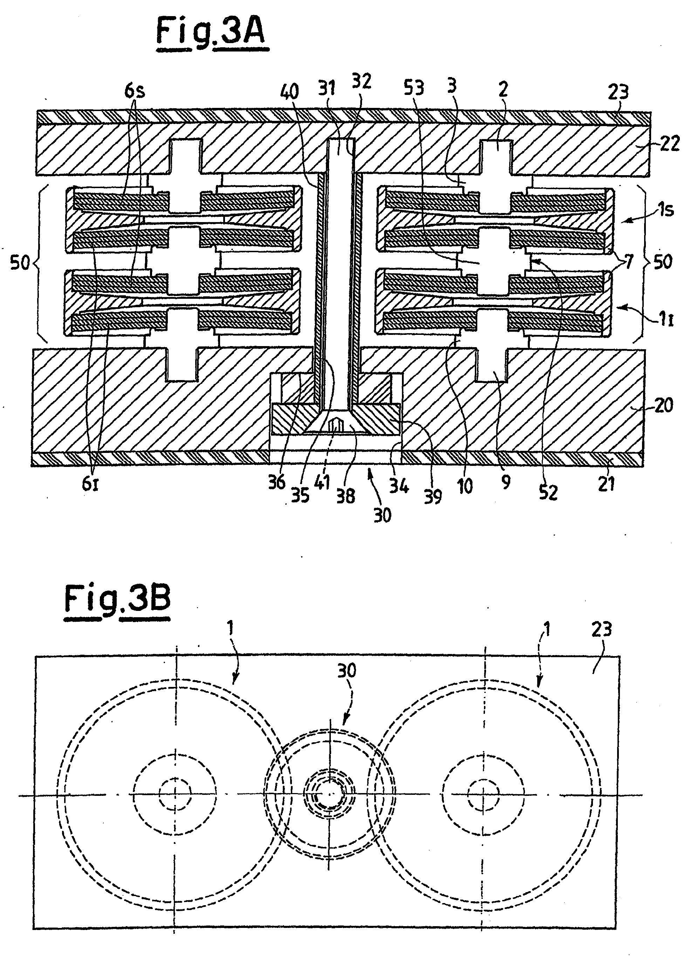

Figures 3A and 3B illustrate an embodiment of the support according to the present invention still having a rectangular shape of the support foot in which two parallel pairs 50 of anti-vibration elements 1 in series are used in place of the two individual elements 1 of the embodiment illustrated with reference to figures 2A,B. The construction of the two plates 20 and 22, base and load plate respectively, and the relative connections and bindings are substantially the same as the embodiment illustrated with reference to figures 2A,B and the same reference numerals are kept.

The element placed between the two anti-vibration elements 1 is substantially a symmetrical cylindrical pin 52 having a disc-shaped widening 53 in its mid-point for resting the centre of the lower leaf-spring 6_{I} of the upper anti-vibration elements 1ₛ on it and for resting the disc 53 itself on the centre of the upper leaf-spring 6ₛ of the lower anti-vibration elements 1_{I}. The two ends of the pin 52 are housed in a matching centering recess at the centre of the leaf-springs, as already stated for the embodiments illustrated previously.

The alternative embodiment illustrated with figures 3A,B allows a greater efficiency of damping due to the two anti-vibration elements 1ₛ and 1_{I} arranged in series with a modest increase in the thickness of the support.

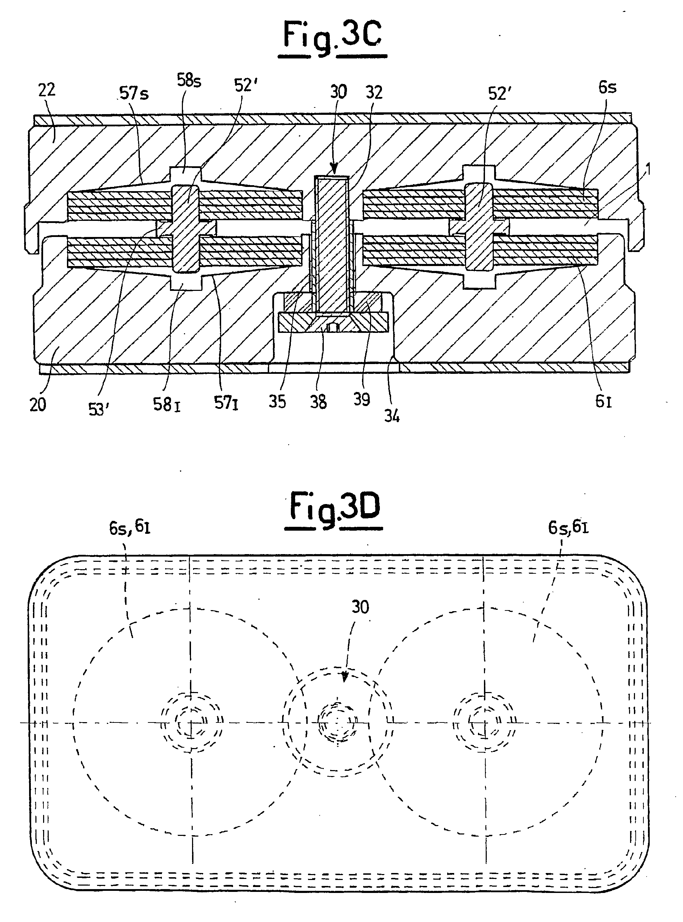

In the case in which the actual thickness of the support is important and must be limited, the design of the structure of the anti-vibration support with a double anti-vibration element and with a symmetrical centering pin according to figures 3A,B can be simplified and realised with less encumbrance in height with the embodiment illustrated in figures 3C,D.

In such an embodiment, the anti-vibration element 1 consists of two individual leaf-springs 6ₛ and 6_{I} which interface according to their concave face and which have a central through-bore for the interposition of a central centering element (52', 53') transmitting the axial forces between the leaf-springs themselves. The element placed between the two anti-vibration elements 1 is substantially a symmetrical cylindrical pin 52' with a disc-shaped widening 53' in its mid-point for resting the centre of the upper leaf-spring 6ₛ of the anti-vibration element on it and for resting the disc 53' itself on the centre of the lower leaf-spring 6_{I}. The two ends of the pin 52' are housed in said centring bores at the centre of the leaf-springs.

Both the upper and lower elastic leaf-springs 6ₛ and 6_{I} are rested and bound at their ends with their insertion in two recesses 57ₛ and 57_{I}, which are concave and which have a shape matching the two leaf-springs which they must receive, which are made in the inner part of the two base and load plates 20, 22. In the recesses 57ₛ and 57_{I} the corresponding leaf-spring rests and fits in their peripheral circular part. The remaining most inner part of said recesses is configured with a greater concavity with respect to the configuration of the leaf-spring at rest to allow it to be able to flex freely under vertical stresses and so that it can carry out the function of damping and absorbing the vibrations without actually banging the base of the recess which contains it. Such recesses 57 carry out the function of the peripheral element 7 for resting and for keeping position of the embodiment illustrated previously.

In the same way as the embodiments illustrated with reference to figures 2A,B and 3A,B, at the centre of the two plates 20 and 22, base and load plate respectively, an adjustable binding 30 is established between the two plates and the same components and reference numerals of the previous figures are used. It comprises an adjustment screw 31 which engages the two parts, which allows a predetermined precompression force to be applied to the device and which establishes an end stop of the backward movement of the plates.

Unlike the bores, 25 and 26 respectively, for the attachment of the two pins 2 and 9 of the two anti-vibration elements illustrated previously, in the inner part of the two base and load plates 20, 22 and at the centre of the two recesses 57ₛ and 57_{I}, two further cylindrical recesses 58ₛ and 58_{I} are made to allow the free movement of the two ends of the symmetrical pin 52', without shocks against the two plates 20 and 22, even in the case in which in the specific embodiment the length of such ends exceeds the thickness of the leaf-spring 6 to which they are connected.

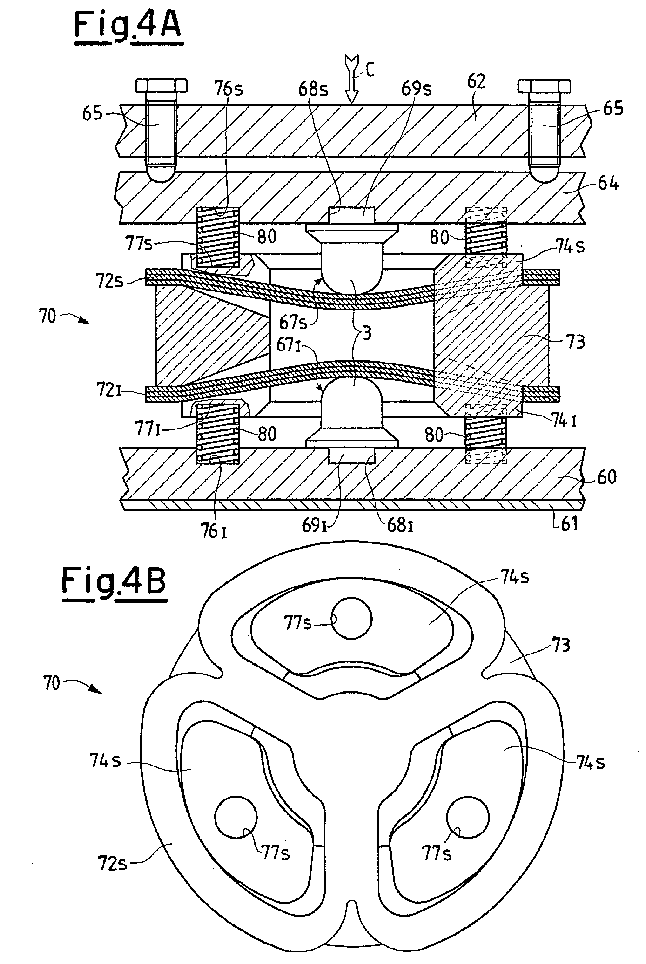

Figures 4A and 4B illustrate a further alternative embodiment of the support according to the present invention in which anti-vibration elements 1 are used in series in combination with levelling springs, according to a circular arrangement in plan view. The construction of the lower base foresees a support plate 60 to which a layer 61 of anti-sliding material is preferably applied for resting on the floor. On the opposite side there is the adjustment plate 62, also circular in plan view, which rests upon the underlying load plate 64, with the interposition of adjustment screws 65. At the centre of the adjustment plate 62 the point of application of the load C is foreseen. In the inner part between the two base and load plates the anti-vibration system 70 according to a variant embodiment of the structure illustrated in figure 1 is arranged.

Under the load plate 64 and over the base plate 60 the thrusting pins 67ₛ and 67_{I}, upper and lower respectively, are placed centrally, resting a the centre of the leaf-springs 72_{I} and 72ₛ, upper and lower respectively. In the inner part of the two base and load plates 60, 64 the bores, 68_{I} and 68ₛ respectively, are made for the attachment of the two pegs or centering elements 69_{I} and 69ₛ of the pins 67_{I} and 67ₛ. Said pegs are shaped to match that of the corresponding bores for their precision positioning and coupling. The two pins 67_{I} and 67ₛ are configured in the opposite part with a convex element 3, for its resting on the central part of the elastic leaf-springs 72_{I} and 72ₛ.

Such a type of rest does not bind the two bases 60, 64 to lie on parallel planes. The overall structure of the embodiments of figures 4A,B allows a greater freedom of adaptation of the support to the underlying support structure.

Said elastic leaf-springs are hollow and trilobated, as illustrated in figure 4B, to leave some angular sectors available for the passage of the levelling springs. The support body 73 of the leaf-springs 72 consists of a central tubular part and is equipped on its two ends with ridges 74ₛ and 74_{I} protruding in the recesses of the trilobated elastic leaf-springs 72_{I} and 72ₛ arranged at 120° from each other. At the ridges 74_{s,I} bores 76_{s,I} are made in the plates 60 and 64, base and load plate respectively, and matching bores 77_{s,I} are made in the ridges 74_{s,I}, for the mounting between them of two series of levelling springs 80, arranged between the tubular body 73 and the two base and load plates 60, 64, which provide a thrust which tends to stabilise the relative position of the load plate 64 when it oscillates with respect to the base plate 60.

The configuration illustrated in figure 4 allows a greater damping and absorption capability of the oscillations to be obtained in the horizontal plane, substantially independently from the orientation in the horizontal plane.

The anti-vibration plate support according to the invention offers substantial advantages with respect to the support systems of the prior art. Amongst them, at least the following deserve a mention.

The anti-vibration plate according to the invention allows a very high damping of oscillations to be obtained, generally greater than 90% and more.

The absorption of oscillations is greater by an order of magnitude than that of the supports available on the market. With reference to the specific application to presses, the oscillation of the press vertically is contained within 0.3 mm, whereas the supports on the market do not go below 3-4 mm. The difference in performance as far as the oscillation in the horizontal plane is concerned is even greater: the 0.5mm of the supports according to the invention compares to the 5-10 mm of the supports on the market. The reduced oscillation, particularly in the horizontal plane, makes the weight of the press virtually static and allows the attachment of the press to the floor to be avoided. The encumbrance in height of the support according to the invention is also quite low, in general about 100 mm or slightly more, and allows access to the work surface of the press through a platform step board, of a low height, without problems for the operators. The structure of the support plate allows a somewhat easy assembly, as well as easy and cost-effective maintenance and replacement. The characteristics of absorption and damping of shocks and vibrations can be easily adapted to specific applications, obtaining the desired performance with the adoption of the most suitable elastic leaf-spring elements. For such a purpose, the leaf-springs can have a different thickness according to the application of the device.

Finally, by using the device of the invention the important advantage of almost totally nullifying the transmission of vibrations - at the same machine upon which the device itself is mounted - coming from the outside, for example from another operating machine, or from a railway line, is also obtained.

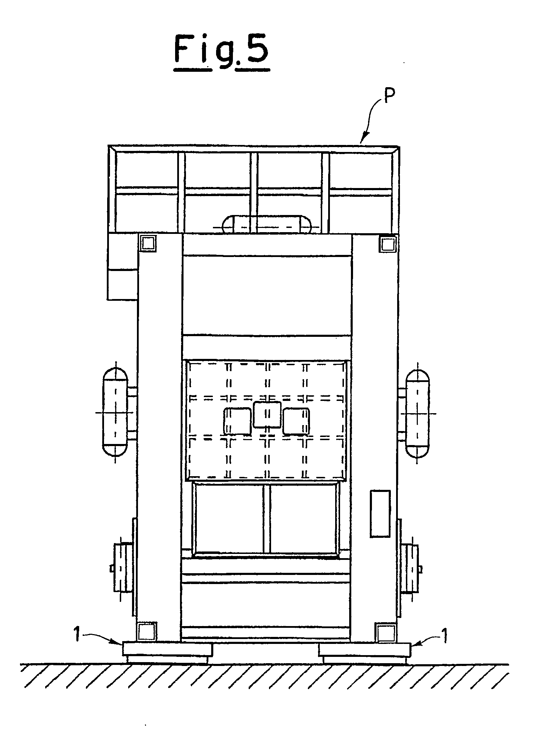

Just as a non-limiting example, figure 5 schematically illustrates a press P mounted on a plurality of devices or anti-vibration feet 1 realised according to the invention.

## Claims

1. Anti-vibration plate support for operating machines, in particular for mechanical presses, comprising a base plate element (20, 60) and a load plate element (22, 64) between which at least one anti-vibration element is arranged which carries out the function of damping the vibrations and absorbing the oscillations, the anti-vibration element (1, 50, 70) comprising:
- a pair of upper and lower elastic leaf-springs or leaf spring packs (6_{S}, 6_{I}; 72_{S}*,* 72_{I}) rested and bound at their ends through recesses in a peripheral support and position-stabilising element (7, 57, 73) or in said plate elements (20, 22, 60, 64);
- two pins or two pegs or a two ended pin (2, 9; 52'; 67_{I}, 67_{S}) resting in the centre of said upper and lower elastic leaf-springs or leaf spring packs (6_{S}, 6_{I}; 72_{S}, 72_{I})
**characterised in that** the recesses are configured with concavity for allowing the pair of upper and lower leaf-springs or leaf spring packs (6_{S}, 6_{I}; 72_{S}, 72_{I} ) to flex freely and to avoid them banging a base of the recess during the damping and the oscillations.

2. Anti-vibration plate support for operating machines according to claim 1, **characterised in that** the upper and lower elastic leaf-springs (6_{S}, 6_{I}; 72_{S}, 72_{I}) are circular and are rested both in the centre with the two cylindrical pins (2, 9; 52', 53'; 67_{I}, 67_{S}) and along their outer circumference with the circular support elements (7, 57, 73).

3. Anti-vibration plate support for operating machines according to claim 1, **characterised in that** in the inner part of the two respective base and load plates (20, 60; 22, 64) the respective bores (25, 76_{I}; 26, 76_{S}) are made for the attachment of the pins (2,9) or of the pegs (69_{I}, 69_{S}) of the anti-vibration elements (1, 70), such pins or pegs having a shape matching that of the bores which receive them for their precision positioning and coupling.

4. Anti-vibration plate support for operating machines according to claim 3, **characterised in that** the bores (25, 76_{I}; 26, 76_{S}) are internally threaded as and the pins (2, 9) or the pegs (69_{I}, 69_{S}) of the anti-vibration elements (1, 50, 70) are also equipped with matching threadings in order to establish a precise positioning and a binding between the pins, or the pegs, and the plates (20, 60; 22, 64).

5. Anti-vibration plate support for operating machines according to claim 1, **characterised in that** between the base and load plates (20, 22) two anti-vibration elements (1) are arranged and **in that** between the two plates (20,22) an adjustable binding (30) is established.

6. Anti-vibration plate support for operating machines according to claim 1, **characterised in that** between the base and load plates (20,22) at least two parallel pairs (50) of anti-vibration elements (1) are arranged in series, **in that** between the two plates (20, 22) an adjustable binding (30) is established and **in that** between the anti-vibration elements arranged in series a connection pin (52) is arranged for resting the centre of the lower leaf-spring (6_{I}) of the upper anti-vibration element (1_{S}) on it and for resting it on the centre of the upper leaf-spring (6_{S},) of the lower anti-vibration elements (1_{I}).

7. Anti-vibration plate support for operating machines according to one of claims 5 and 6, **characterised in that** the binding (30) comprises a screw (31) which engages the two plates (20,22) and a locking spacer (40) consisting of a tubular segment which contains the screw (31), the screw (31) being equipped with a countersunk head (38) which rests upon the matching conical recess of a washer (39) which in turn rests upon a shoulder (36) with the interposition of a gasket, for example made from polyurethane rubber.

8. Anti-vibration plate support for operating machines according to one of claims 5 and 6, **characterised in that** the binding system (30) is sized and installed so as to give the anti-vibration elements (1) a precompression and to always keep the two leaf-springs (6_{S}, 6_{I}) under tension and in engagement with the pins (2,9), and with the elements (7) to avoid them colliding during the damping and the oscillations.

9. Anti-vibration plate support for operating machines according to claim 1, **characterised in that** between the base and load plates (20,22) at least two pairs of upper and lower elastic leaf-springs (6_{S}, 6_{I}) are arranged, **in that** between the two plates (20, 22) an adjustable binding (30) is established, **in that** between the elastic leaf- springs a symmetrical connection pin (52') is arranged having a disc-shaped widening (53') in its mid-point for the resting of the centre of the upper leaf-spring (6_{S}) of the anti-vibration element on it and for the resting of the disc itself (53') on the centre of the lower leaf-spring (6_{I}) and **in that** said upper and lower leaf-springs (6_{S}, 6_{I}) are rested and bound at their ends with their insertion in two recesses (57_{S}, 57_{I}) made in the inner part of the two base and load plates (20,22).

10. Anti-vibration plate support for operating machines according to claim 1, **characterised in that** between the base and load plates (60,64) the anti-vibration system (70) is arranged connected with said plates with centered thrust pins (67_{S}, 67_{I}), which rest at the centre of the leaf-springs (72_{S}, 72_{I}), with bores (68_{I}, 68_{S}) being made in the inner parts of the plates (60, 64), for the attachment of the pins (67_{I}, 67_{S});
**in that** said pins rest upon the central part of the elastic leaf-springs (72_{I}, 72ₛ) without binding the two bases (60,64) to lie on parallel planes;
**in that** the tubular support body (73) of the leaf-springs (72_{S,I}) carried levelling springs (80) of the load plate (64).

11. Anti-vibration plate support for operating machines according to claim 10, **characterised in that** the elastic leaf-springs (72_{I}, 72_{S}) are hollow and trilobated, and
**in that** the support body (73) of said leaf-springs consists of a tubular central part and is equipped on its two ends with ridges (74_{S},74_{I}) protruding in the recesses of the elastic leaf-springs (72_{I}, 72_{S}) ; **in that** at the protruding ridges (74_{S,I}) two series of levelling springs (80) are mounted stabilising the relative position of the load plate (64) with respect to the base plate (60).

## Patentansprüche

1. Antivibrations-Lagerungsplatte für den Betrieb von Maschinen, insbesondere mechanischen Pressen, mit einem Basisplattenelement (20, 60) und einem Lastplattenelement (22, 64), zwischen denen wenigstens ein Antivibrationselement angeordnet ist, das eine Dämpfung der Vibrationen und eine Absorption der Schwingungen bewirkt, wobei das Antivibrationselement (1, 50, 70) aufweist:
ein Paar oberer und unterer Blattfedern oder Blattfederbündel (6_{S}, 6_{I}; 72_{S}, 72_{I}), die an ihren Enden auf Ausnehmungen in einer Umfangsstütze und einem positionsstabilisierenden Element (7, 57, 73) oder in den Plattenelementen (20, 22, 60, 64) aufliegen und durch diese geführt sind;
zwei Stifte, zwei Zapfen oder einen doppelendigen Stift (2, 9; 52'; 67_{I}, 67_{S}), die in der Mitte der oberen und unteren elastischen Blattfedern oder Blattfederbündel (6_{S}, 6_{I}; 72_{S}, 72_{I}) aufliegen,
**dadurch gekennzeichnet, dass** die Ausnehmungen konkav ausgebildet sind, um dem Paar oberer und unterer Blattfedern oder Blattfederbündel (6_{S}, 6_{I}; 72_{S}, 72_{I}) ein freies Verbiegen zu ermöglichen, und um deren Anstoßen an eine Basis der Ausnehmung während der Dämpfung und den Schwingungen zu vermeiden.

2. Antivibrations-Lagerungsplatte für den Betrieb von Maschinen gemäß Anspruch 1, **dadurch gekennzeichnet, dass** die oberen und unteren elastischen Blattfedern (6_{S}, 6_{I}; 72_{S}, 72_{I}) kreisförmig sind und beide in der Mitte auf den zwei zylindrischen Stiften (2, 9; 52', 53'; 67_{I}, 67_{S}) und längs ihres Außenumfangs auf den kreisförmigen Stützelementen (7, 57, 73) aufliegen.

3. Antivibrations-Lagerungsplatte für den Betrieb von Maschinen gemäß Anspruch 1, **dadurch gekennzeichnet, dass** jeweils in dem Innenabschnitt der Basis- bzw. Lastplatte (20, 60; 22, 64) die jeweiligen Bohrungen (25, 76_{I}; 26, 76_{S}) zum Anbringen der Stifte (2, 9) oder der Zapfen (69_{I}, 69_{S}) der Antivibrationselemente (1, 70) ausgelegt sind, so dass die Stifte oder Zapfen eine Form aufweisen, die zu der der Bohrungen passt, die diese für deren Präzisionspositionierung und -kopplung aufnehmen.

4. Antivibrations-Lagerungsplatte für den Betrieb von Maschinen gemäß Anspruch 3, **dadurch gekennzeichnet, dass** die Bohrungen (25, 76_{I}; 26, 76_{S}) mit einem Innengewinde versehen sind, und die Stifte (2, 9) oder die Zapfen (69_{I}, 60_{S}) der Antivibrationselemente (1, 50, 70) ebenfalls mit passenden Gewinden ausgerüstet sind, um eine präzise Positionierung und Kopplung zwischen den Stiften oder den Zapfen und den Platten (20, 60; 22, 64) zu erreichen.

5. Antivibrations-Lagerungsplatte für den Betrieb von Maschinen gemäß Anspruch 1, **dadurch gekennzeichnet, dass** zwischen der Basis- und der Lastplatte (20, 22) zwei Antivibrationselemente (1) angeordnet sind, und zwischen den zwei Platten (20, 22) eine verstellbare Verbindung (30) eingerichtet ist.

6. Antivibrations-Lagerungsplatte für den Betrieb von Maschinen gemäß Anspruch 1, **dadurch gekennzeichnet, dass** zwischen der Basis- und der Lastplatte (20, 22) wenigstens zwei parallele Paare (50) von Antivibrationselementen (1) in Serie angeordnet sind, dass zwischen den zwei Platten (20, 22) eine verstellbare Verbindung (30) eingerichtet ist, und dass zwischen den in Serie angeordneten Antivibrationselementen ein Verbindungsstift (52) angeordnet ist, damit das Zentrum der unteren Blattfeder (6_{I}) des oberen Antivibrationselements (1_{S}) auf ihr aufliegt, und damit es auf dem Zentrum der oberen Blattfeder (6_{S}) des unteren Antivibrationselements (1_{I}) aufliegt.

7. Antivibrations-Lagerungsplatte für den Betrieb von Maschinen gemäß einem der Ansprüche 5 und 6, **dadurch gekennzeichnet, dass** die Verbindung (30) eine Schraube (31) aufweist, die die zwei Platten (20, 22) in Eingriff bringt, sowie einen Sperrabstandshalter (40), der aus einem die Schraube (31) enthaltenden rohrförmigen Segment besteht, wobei die Schraube (31) mit einem Senkkopf (38) ausgerüstet ist, der auf einer passenden konischen Ausnehmung einer Beilagscheibe (39) aufliegt, die wiederum auf einer Schulter (36) unter Zwischenlagerung einer Dichtung, z.B. aus Polyurethan-Gummi, aufliegt.

8. Antivibrations-Lagerungsplatte für den Betrieb von Maschinen gemäß einem der Ansprüche 5 und 6, **dadurch gekennzeichnet, dass** das Verbindungssystem (30) so bemessen und eingerichtet ist, dass es den Antivibrationselementen (1) eine Vorkompression verleiht und die zwei Blattfedern (6_{S}, 6_{I}) unter Spannung und in Eingriff mit den Stiften (2, 9) und mit den Elementen (7) hält, um deren Zusammenstoßen während der Dämpfung und der Schwingungen zu vermeiden.

9. Antivibrations-Lagerungsplatte für den Betrieb von Maschinen gemäß Anspruch 1, **dadurch gekennzeichnet, dass** zwischen der Basis- und der Lastplatte (20, 22) wenigstens zwei Paare oberer und unterer elastischer Blattfedern (6_{S}, 6_{I}) angeordnet sind, dass zwischen den zwei Platten (20, 22) eine verstellbare Verbindung (30) eingerichtet ist, dass zwischen den elastischen Blattfedern ein symmetrischer Verbindungsstift (52') angeordnet ist, der eine scheibenförmige Verbreiterung (53') in seinem Mittelpunkt für das Aufliegen auf der Mitte der oberen Blattfeder (6_{S}) des Antivibrationselements und für das Aufliegen der Scheibe selbst (53') auf der Mitte der unteren Blattfeder (6_{I}) aufweist, und dass die obere und die untere Blattfeder (6_{S}, 6_{I}) an ihren Enden durch ihr Einsetzen in zwei Ausnehmungen (57_{S}, 57_{I}) aufliegen und geführt sind, die in dem Innenabschnitt der Basis- und der Lastplatte (20, 22) hergestellt sind.

10. Antivibrations-Lagerungsplatte für den Betrieb von Maschinen gemäß Anspruch 1, **dadurch gekennzeichnet, dass** zwischen der Basis- und der Lastplatte (60, 64) das Antivibrationssystem (70) verbunden mit den Platten durch zentrierte Druckstifte (67_{S}, 67_{I}) angeordnet ist, die in der Mitte der Blattfedern (72_{S}, 72_{I}) aufliegen, wobei Bohrungen (68_{I}, 68_{S}) in den Innenabschnitten der Platten (60, 64) für das Anbringen der Stifte (67_{I}, 67_{S}) hergestellt sind;
dass die Stifte auf dem Mittelabschnitt der elastischen Blattfedern (72_{I}, 72_{S}) ohne Verbindung der beiden Basisplatten (60, 64) aufliegen, um auf parallelen Ebenen zu liegen;
dass der rohrförmige Stützkörper (73) der Blattfedern (72_{S,I}) Ausgleichsfedern (80) der Lastplatte (64) trägt.

11. Antivibrations-Lagerungsplatte für den Betrieb von Maschinen gemäß Anspruch 10, **dadurch gekennzeichnet, dass** die elastischen Blattfedern (72_{I}, 72_{S}) hohl und dreiblättrig sind, dass der Stützkörper (73) der Blattfedern aus dem rohrförmigen Mittelabschnitt besteht und an seinen beiden Enden mit Rippen (74_{S}, 74_{I}) ausgerüstet ist, die in die Ausnehmungen der elastischen Blattfedern (72_{I}, 72_{S}) vorstehen, und dass an den vorstehenden Rippen (74_{S,I}) zwei Reihen von Ausgleichsfedern (80) befestigt sind, die die relative Position der Lastplatte (64) bezüglich der Basisplatte (60) stabilisieren.

## Revendications

1. Dispositif support à plaque anti-vibrations destiné à des machines en fonctionnement, en particulier à des presses mécaniques, comprenant un élément de plaque de base (20, 60) et un élément de plaque de charge (22, 64) entre lesquels au moins un élément anti-vibrations est disposé, lequel exécute la fonction d'amortissement des vibrations et d'absorption des oscillations, l'élément anti-vibrations (1, 50, 70) comportant :
- une paire de ressorts à lames élastiques supérieur et inférieur ou des ensembles de ressorts à lames (6ₛ, 6_{I}, 72ₛ, 72_{I}) reposant et liés au niveau de leurs extrémités à travers des évidements dans un élément de stabilisation de position et de support périphérique (7, 57, 73) ou dans lesdits éléments de plaque (20, 22, 60, 64) ;
- deux broches ou deux ergots ou une broche à deux extrémités (2, 9 ; 52' ; 67_{I}, 67ₛ) reposant au centre desdits ressorts à lames élastiques supérieur et inférieur ou desdits ensembles de ressorts à lame (6ₛ, 6_{I} ; 72ₛ, 72_{I}),
**caractérisé en ce que** les évidements sont configurés avec une concavité pour permettre à la paire de ressorts à lame supérieur et inférieur ou aux ensembles de ressorts à lame (6ₛ, 6₁ ; 72ₛ, 72_{I}) de s'infléchir librement et afin de leur éviter de heurter violemment une base de l'évidement pendant l'amortissement et les oscillations.

2. Dispositif support à plaque anti-vibration destiné à des machines en fonctionnement selon la revendication 1, **caractérisé en ce que** les ressorts à lame supérieur et inférieur (6ₛ, 6_{I} ; 72ₛ, 72_{I}) sont circulaires et sont, à la fois, au centre, avec les deux broches cylindriques (2, 9 ; 52', 53' ; 67_{I}, 67ₛ) et le long de leur circonférence extérieure avec les éléments de support circulaires (7, 57, 73).

3. Dispositif support à plaque anti-vibrations destiné à des machines en fonctionnement selon la revendication 1, **caractérisé en ce que** dans la partie interne des deux plaques respectives de base et de charge (20, 60 ; 22, 64) les trous respectifs (25, 76_{I} ; 26, 76ₛ) sont formés en vue de la fixation des broches (2, 9) ou des ergots (69_{I}, 69s) des éléments anti-vibration (1, 70), ces broches ou ces ergots présentant une configuration s'ajustant à celle des trous qui les reçoivent afin de les positionner et de les coupler avec précision.

4. Dispositif support à plaque anti-vibrations destiné à des machines en fonctionnement selon la revendication 3, **caractérisé en ce que** les trous (25, 76_{I} ; 26, 76ₛ) sont taraudés intérieurement et **en ce que** les broches (2, 9) ou les ergots (69_{I}, 69ₛ) des éléments anti-vibration (1, 50, 70) sont également dotés de filetages d'ajustement afin d'établir un positionnement et une liaison précise entre les broches, ou entre les ergots, et les plaques (20, 60 ; 22, 64).

5. Dispositif support à plaque anti-vibration destiné à des machines en fonctionnement selon la revendication 1, **caractérisé en ce qu'**entre les plaques de base et de charge (20, 22) deux éléments anti-vibrations (1) sont disposés et **en ce qu'**entre les deux plaques (20, 22) une liaison réglable (30) est établie.

6. Dispositif support à plaque anti-vibration destiné à des machines en fonctionnement selon la revendication 1, **caractérisé en ce qu'**entre les plaques de base et de charge (20, 22) au moins deux paires parallèles (50) d'éléments anti-vibration (1) sont disposées en série, **en ce qu'**entre les deux plaques (20, 22) une liaison réglable (30) est établie et **en ce qu'**entre les éléments anti-vibration disposés en série une broche de connexion (52) est disposée pour faire reposer sur elle le centre du ressort à lame inférieur (6_{I}) de l'élément anti-vibrations supérieur (1ₛ) et pour la faire reposer sur le centre du ressort à lames supérieur (6_{s'}) des éléments anti-vibrations inférieurs (1_{I}).

7. Dispositif support à plaque anti-vibrations destiné à des machines en fonctionnement selon l'une des revendications 5 et 6, **caractérisé en ce que** la liaison (30) comporte une vis (31) qui s'engage avec les deux plaques (20, 22) et une entretoise de verrouillage (40) constituée d'un segment tubulaire qui contient la vis (31), la vis (31) étant pourvue d'une tête conique (38) qui repose sur l'évidement conique d'ajustement d'une rondelle (39) qui, à son tour, repose sur un épaulement (36), un joint d'étanchéité, par exemple, constitué de caoutchouc au polyuréthanne, étant interposé.

8. Dispositif support à plaque anti-vibrations destiné à des machines en fonctionnement selon l'une des revendications 5 et 6, **caractérisé en ce que** le système de liaison (30) est dimensionné et installé de façon à exercer sur les éléments anti-vibrations (1) une pré-compression et à maintenir toujours les deux ressorts à lame (6ₛ, 6_{I}) sous tension et en engagement avec les broches (2, 9), et avec les éléments (7) pour leur éviter de se heurter pendant l'amortissement et les oscillations.

9. Dispositif support à plaque anti-vibrations destiné à des machines en fonctionnement selon la revendication 1, **caractérisé en ce qu'**entre les plaques de base et de charge (20, 22), au moins deux paires de ressorts à lames élastiques supérieurs et inférieurs (6ₛ, 6_{I}) sont agencées, **en ce qu'**entre les deux plaques (20, 22) une liaison réglable (30) est établie, **en ce qu'**entre les ressorts à lames élastiques une broche de connexion symétrique (52') est disposée présentant un élargissement en forme de disque (53') en son milieu pour qu'y repose le centre du ressort à lames supérieur (6ₛ) de l'élément anti-vibration et pour que repose le disque lui-même (53') sur le centre du ressort à lames inférieur (6_{I}) et **en ce que** lesdits ressorts à lames supérieur et inférieur (6ₛ, 6_{I}) soient supportés et liés au niveau de leurs extrémités par leur insertion dans deux évidements (57ₛ, 57_{I}) formés dans la partie intérieure des deux plaques de base et de charge (20, 22).

10. Dispositif support à plaque anti-vibrations destiné à des machines en fonctionnement selon la revendication 1, **caractérisé en ce qu'**entre les plaques de base et de charge (60, 64) le système anti-vibrations (70) est agencé en connexion avec lesdites plaques avec des broches de poussée centrées (67ₛ, 67_{I}), lesquelles reposent au niveau du centre des ressorts à lames (72ₛ, 72I), des trous (68_{I}, 68s) étant formés dans les parties intérieures des plaques (60, 64), pour la fixation des broches (67_{I}, 67ₛ) ;
**en ce que** lesdites broches reposent sur la partie centrale des ressorts à lames élastiques (72_{I}, 72ₛ) sans liaison des deux bases (60, 64) pour s'étendre sur des plans parallèles ;
**en ce que** le corps de support tubulaire (73) des ressorts à lame (72ₛ, _{I}) supportent des ressorts de mise au niveau (80) de la plaque de charge (64).

11. Dispositif support à plaque anti-vibrations destiné à des machines en fonctionnement selon la revendication 10, **caractérisé en ce que** les ressorts à lames élastiques (72_{I}, 72ₛ) sont creux et trilobés, et **en ce que** le corps de support (73) desdits ressorts à lames est constitué d'une partie tubulaire centrale et est pourvu sur ses deux extrémités de nervures (74ₛ, 74_{I}) faisant saillie dans les évidements des ressorts à lames élastiques (72_{I}, 72ₛ) ; **en ce qu'**au niveau des nervures en relief (74ₛ, _{I}) deux séries de ressorts de mise au niveau (80) sont montés, stabilisant la position relative de la plaque de charge (64) par rapport à la plaque de base (60).
